# EUROPEAN PATENT SPECIFICATION

(11) **EP 1 712 384 B1**
(45) Date of publication and mention of the grant of the patent: **16.07.2008**
(21) Application number: 05113109.2
(22) Date of filing: 30.12.2005
(51) Int. Cl.: B60H 1/34

(54) **Air distribution air vent for vehicle dashboards**
Luftverteilungsdüse für Fahrzeugarmaturenbretter
Buse de distribution d'air pour tableaux de bord de véhicules

(30) Priority: 11.04.2005 IT TO20050238
(43) Date of publication of application: 18.10.2006
(73) Proprietor: Martur Falcad S.r.l., 10143 Torino (IT)
(72) Inventor: Turletti, Massimo, 10139 Torino (IT)
(74) Representative: Marchitelli, Mauro

(56) References cited:
- DE-A1- 2 012 000
- DE-B3- 10 226 441
- FR-A1- 2 809 349
- FR-A1- 2 844 484
- US-A- 4 413 551
- US-A1- 2002 081 965

## Description

This invention relates to an air distribution airvent for vehicle dashboards.

The traditional airvents are composed by an outer casing which defines a passage duct of the airflow and a valvular device controllable to open and close the air duct of the airflow. The known airvents usually also have a first adjusting device to adjust the airflow output direction along a first direction, for example horizontal, and a second adjusting device to adjust the airflow output direction placed downstream of the first adjusting device and able to adjust the airflow output direction along a second direction, for example vertical.

In the known solutions there is usually a first control device combined to the valvular device which controls opening and closing of the output duct of the airflow and a second control device combined to the first and second adjusting device. The first device is often composed by a small wheel which is manually rotatable in a direction to adjust the opening of the output duct and in the opposite direction to close the duct. The second device is often composed by a cursor movable along a first direction to adjust the position of a first set of deflector members and along a second direction to control the position of a second set of deflector members.

Furthermore there is known from US 2002/0081965 A1 an airvent upon which the preamble of appending claim 1 is based.

The object of the present invention is to provide an airvent with an improved control device able to control all the airvent functions using only one control element.

According to the present invention, this object is achieved by an airvent having the features defined in the claims.

The characteristics and advantages of the present invention will become clear in the course of the detailed description, which follows, given purely as a non-limiting example wherein:
- Figure 1 is a perspective view of a first embodiment of an airvent according to the present invention,
- Figure 2 is a back perspective view of the airvent of Figure 1 without the outer casing,
- Figure 3 is a section taken along line III-III of Figure 1,
- Figures 4, 5 and 6 are sections taken along line IV - IV of Figure 1 in three different working positions, and
- Figure 7 is a perspective view of a second embodiment of an airvent according to the invention.

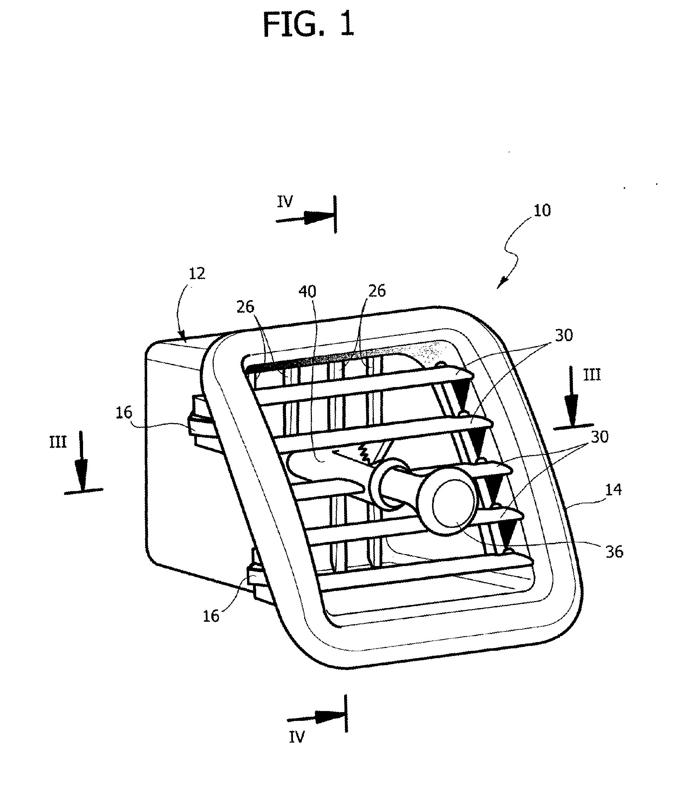

Referring to Figure 1, an airvent for vehicle dashboards is indicated by 10. The airvent 10 includes an outer casing 12 which has a tubular shape, for example a square section, defining internally airflow duct. The outer casing 12 has at one of its ends 14 a frame whose opening forms the output section of the airflow. The outer frame 14, which is fixed or integrally formed with the casing 12, has anchoring means for snap-fitting the airvent 10 in an opening provided in a vehicle dashboard (not shown).

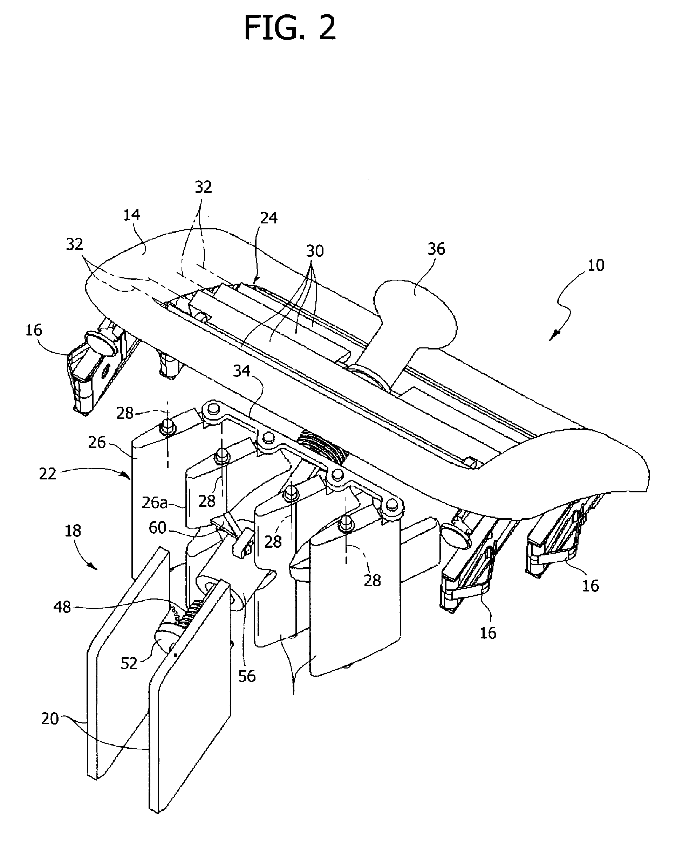

Referring to Figure 2, the airvent 10 comprises a valvular device 18 which includes two wings 20 articulated with respect to the outer casing and movable between an open and a closed position. In the closed position, the two wings 20 close the airflow duct, thus preventing the output of air through the airvent 10.

The airvent 10 comprises a first adjusting device 22 and a second adjusting device 24, for adjusting the output direction of the airflow. The first adjusting device 22 is placed to adjust the airflow direction in a first plane, for example horizontal. The second adjusting device 24 is placed downstream of the first adjusting device 22 referring to the direction of the airflow and it is also placed to adjust the output direction of the airflow in a second plane, for example vertical. The first adjusting device 22 comprises a first set of deflector members 26 articulated to the outer casing 12 around respective axes 28, for example vertical. The second adjusting device 24 comprises a second set of deflector members 30 articulated to the frame 14 around respective axes 32, for example horizontal. The deflector members 26 of the first adjusting device 22 are connected to each other by means of a connection element 34 which transmits the adjusting movement from the deflector element indicated by 26a to the other deflector elements 26. The deflector members 30 of the second adjusting device 24 are connected to each other by means of a connection element (not visible in the Figures) similar to the connection element 34 of the first adjusting device 22.

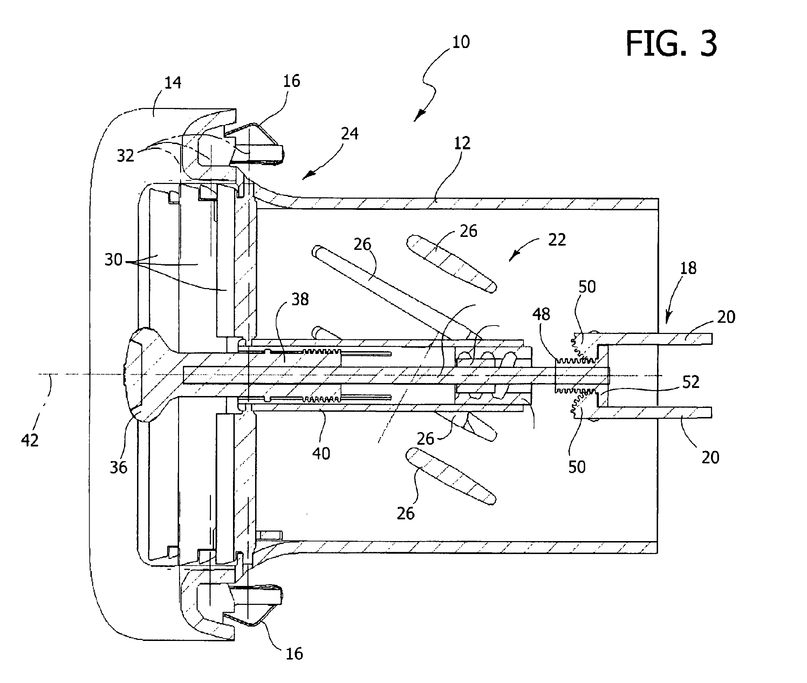

Referring to Figures 3, 4, 5 and 6, the airvent 10 according to the invention has only one adjusting knob 36 to control the valvular device 18, the first adjusting device 22 and the second adjusting device 24. The structure and the operation of the knob 36 are described in the following.

The knob 36 is attached to a cylindrical stem 38 which is guided in a tubular seat 40 fixed with respect to the outer casing 12. The knob 36 is free to move along a rectilinear direction 42 coinciding with the axis of the tubular seat 40. The knob 36 is also free to rotate with respect to the tubular seat around the axis 42.

The cylindrical stem 38 of the knob 36 has a square seat 44 where there is inserted an end portion of a square shaft 46. The shaft 46 is rotatably connected to the knob 36.

The shaft 46 has on its opposite end with respect to the knob 36 a toothed element 48 which co-operates with two toothed sectors 50 attached to the wings 20 of the valvular device 18. The toothed element 48 has an enlarged head 52 which co-operates in stopping relationship with two plane surfaces of the toothed sectors 50 to define an end-of-travel position corresponding to the completely open position of the wings 20.

On the shaft 46 there is also a bush 54 which engages a nut screw 56. The nut screw 56 is rotatably fixed with respect to the outer casing 12. Thus, the nut screw 56 cannot rotate respect to the outer casing 12, but it can move in the direction of the axis 42. The engagement between the bush 54 fixed to the shaft 46 and the nut screw 56 can be obtained, for example, by means of a ball 58 engaging in a semi-spherical seat of the bush 54. The ball 58 occupies an internal helical spline of the nut screw 56. Thus, between the shaft 46 and the nut screw 56 a screw and nut engagement is realized. As can be seen in Figure 2, the nut screw 56 is joined by a lever 60 to the deflector member 26a. The movement in the direction of the axis 42 of the nut screw 56 provokes an oscillation of the deflector member 26a around its articulation axis 28. The oscillation of the deflector member 26a around the axis 28 commands, by means of the connection element 34, the oscillation of the other deflector members 26 around the respective articulation axis 28. Thus, by the rotation of the controlling knob 36 around the axis 42 it is possible to vary the position of the deflector members 26 of the first adjusting device 22.

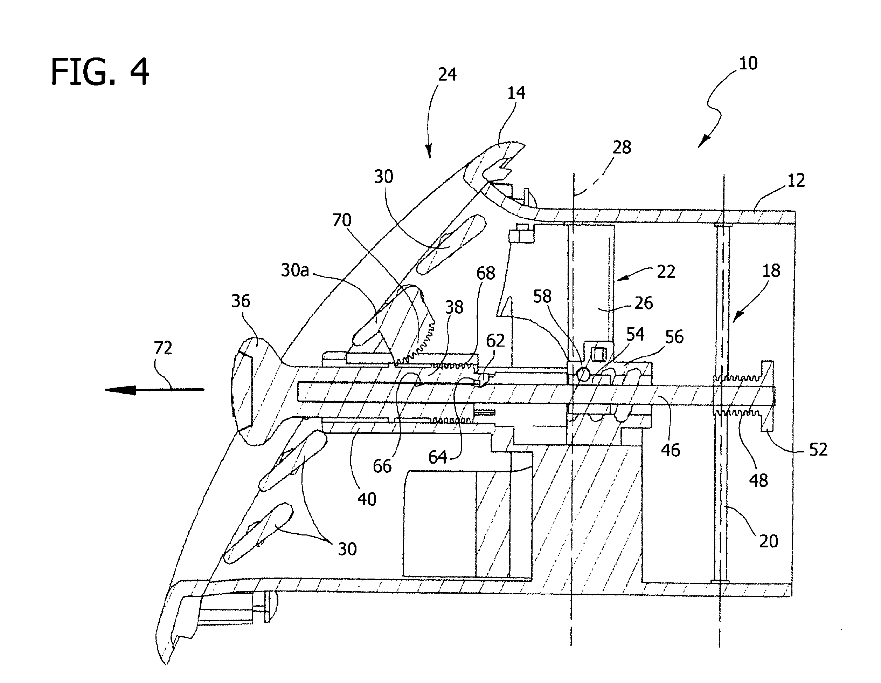

Referring to Figures 4, 5 and 6, the tubular portion 38 of the knob 36 has at its opposite end with respect to the knob 36 an elastic deformable claw 62. The claw 62 works on the external surface of the shaft 46. On the shaft surface there are two notches 64, 66 axially spaced out from each other. The knob 36 can move axially with respect to the shaft 46 when the axial strength applied between the knob 36 and the shaft 46 exceeds the force necessary to disengage the elastical claw 62 from the notch 64 or 66. The distance between the notches 64 and 66 delimitates the relevant movement excursion between the knob 66 and the shaft 46 in the axial direction 42.

The tubular shaft 38 of the knob 36 has a toothed portion 68 which is intended to cooperate with a toothed sector 70 attached to a deflector member 30a belonging to the second adjusting device 24. The movement in the axial direction of the knob 36 determines, thanks to the engagement between the toothed portion 68 and the toothed sector 70, the rotation of the deflector member 30a around its articulation axis 32. The rotational movement of the deflector member 30a is transmitted to the other deflector members 30 by means of a connecting element similar to the joining element 34 of the first controlling device 22.

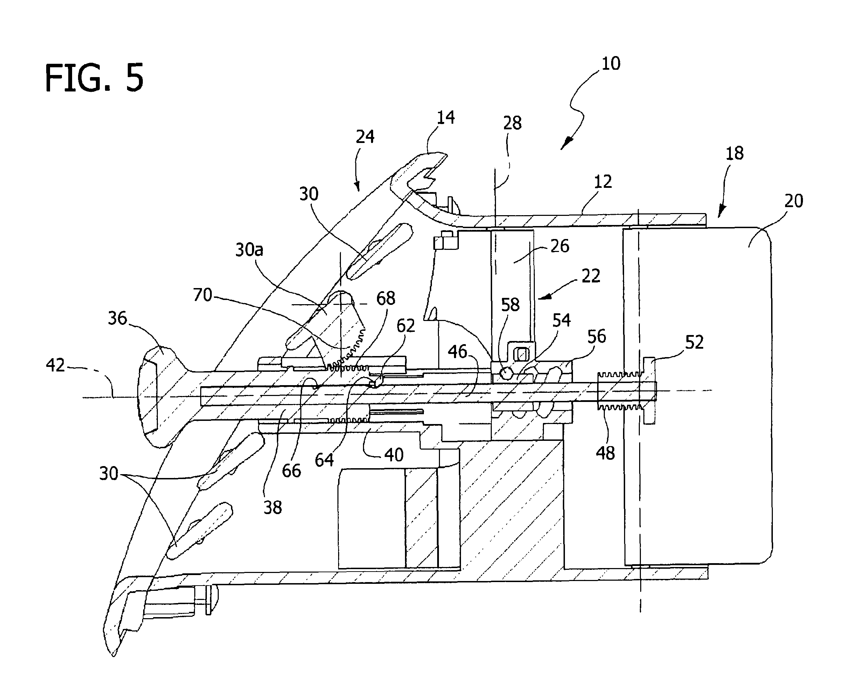

Referring to Figures 4, 5 and 6, the operation of the airvent 10 according to the present invention is the following. Figure 4 shows the airvent in the position in which the valvular device is closed. In this position, the wings 20 are orthogonal with respect to the shaft 46 and they occlude the air duct defined by the internal surface of the external covering 12. The elastic tooth 62 engages the first notch 64 of the shaft 46. By pulling the controlling knob 36 in the direction indicated by the arrow 72 in Figure 4, the knob 36 and the shaft 46 move together in order to reach the position shown in Figure 5. This Figure represents the position in which the valvular device 18 is completely open. In this position, the wings 20 extend parallel to the shaft 46 and the air duct is completely open. In this position, the head 52 of the toothed member 48 abuts against the plane surfaces of the toothed sectors 50, as shown in Figure 3. By keeping on pulling the knob 36, the shaft 46 remains still because the head 52 holds it firmly. The elastic tooth 62 disengages from the first notch 64 and the knob 36 moves outwardly. As it can be seen in Figure 5, in the completely open position of the valvular member 18 the toothed portion 68 of the tubolar stem 30 starts to engage the toothed sector 70. Thus, the outward movement of the adjusting knob 36 provokes the deflector member 30a and, then, the rotation of the other deflector member 30 around the respective axis.

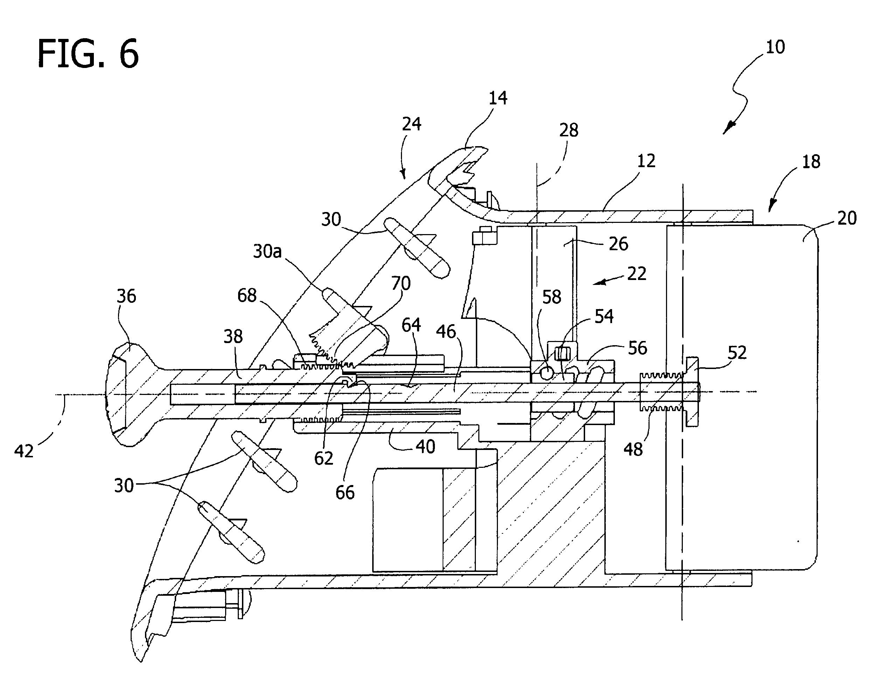

Figure 6 shows the outward end-of-travel position of the adjusting knob 36. This position is defined by the condition in which the tooth 62 engages with the second notch 66. The second notch 66 is formed so as to establish a stopping position for the tooth 62, so as not to allow a further outward movement of the controlling knob 36. The position in which the elastic tooth 62 is in an intermediate position between the two notches 64 and 66 define the respective adjusting positions of the deflector members 30. In any adjusting positions, the rotation of the controlling knob 36 around the axis 42 commands the movement of the deflector members 26 of the first adjusting device 22. Thus, acting on the only controlling knob 36 it is possible to control the opening and the closing of the valvular device 18 and also the operating position of the first and second adjusting device 22, 24.

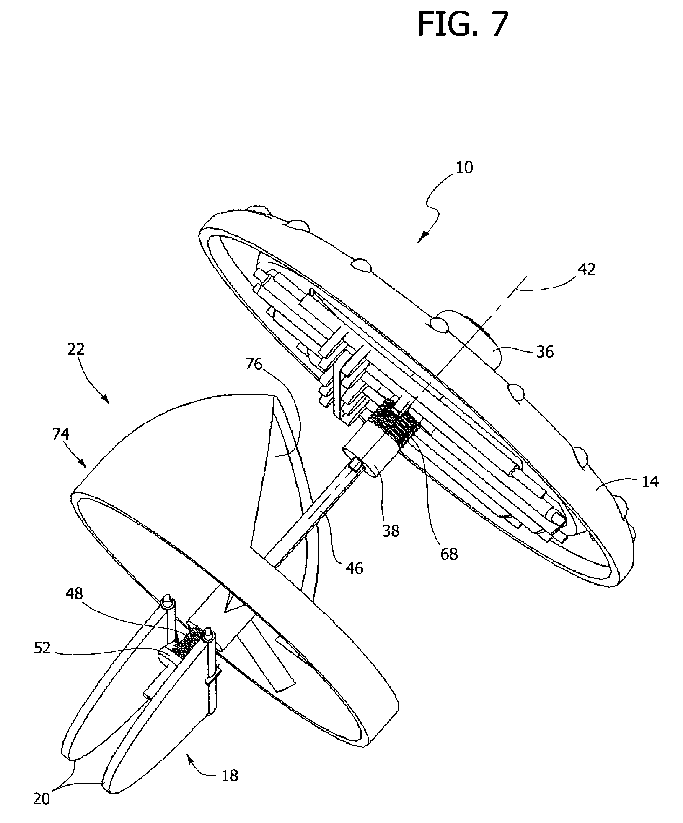

Figure 7 shows a second embodiment of the airvent according to the present invention. The parts corresponding to the ones formerly described are indicated with the same reference numbers. In this embodiment, the frame 14 of the airvent 10 has a circular shape. Also the airvent outer casing (not illustrated in Figure 7) has a tubular shape with a circular section. The most important difference with the respect to the former embodiment is about the way in which the first adjusting device 22 has been construed. Instead of providing many deflector members 26 articulated around respective axes with respect to the outer casing, the first controlling device 22 in this second relization comprises a shaped body 74 with a deflection wall having a surface 76 able to deflect the air flow. The shaped body 74 is fixed with respect to a hub 78 which is fixed for rotation with respect to the shaft 46. Thus, the rotation of the shaft 46 around the axis 42 determines the rotation of the shaped body 74 around the same axis.

## Claims

1. Air distribution airvent for vehicle dashboards, including:
- an outer casing (12) which defines a passage duct of the airflow,
- a valvular device (18) for opening and closing the passage duct of the airflow,
- a first device (22) for adjusting the output direction of the airflow, and
- a second device (24) for adjusting the output direction of the airflow, placed downstream of the first adjusting device (22),
**characterized in that** it includes just a single controlling knob (36) movable in a linear direction (42) to control the opening and the closing of the valvular device (18), and angularly rotatable to control the first adjusting device (22) and further movable along said linear direction (42) to control the second adjusting device (24).

2. Airvent according the claim 1, **characterized in that** the controlling knob (36) has a tubular stem (38) which is guided in a tubular seat (40) attached to the outer casing (12).

3. Airvent according to the claim 2, **characterized in that** the tubular stem (38) of the controlling knob (36) is fixed for rotation to a shaft (46) which is movable together with the controlling knob (36) along said linear direction (42) for a part of the travel of the controlling knob (36) along the same linear direction (42).

4. Airvent according to the claim 3, **characterized in that** a toothed member (48) is fixed to one of the ends of said shaft (46), the toothed member (48) cooperating with two toothed sectors (50) which control the opening and closing movement of two wings (20) belonging to the valvular device (18).

5. Airvent according to the claim 3, **characterized in that** the shaft (46) controls the adjusting movement of the deflector members (26) of the first adjusting device (22) by means of a screw and nut device (54, 56, 58).

6. Airvent according to the claim 3, **characterized in that** said shaft (46) is fixed for rotation with respect to a shaped body (74) belonging to the first adjusting device (22), said shaped body (74) having a wall (76) for the air flow deflection.

7. Airvent according to the claim 3, **characterized in that** the tubular stem (38) of the controlling knob (36) has a toothed portion (68) which cooperates with a toothed sector (70) of a deflector member (30a) belonging to the second adjusting device (24).

8. Airvent according to the claim 3, **characterized in that** the tubular stem (38) of the adjusting knob (36) has an elastic tooth (62) which engages selectively a first and a second notch (64, 66) formed on the stem external surface (46).

## Patentansprüche

1. Luftverteiler-Entlüftungsöffnung für Fahrzeug-Armaturenbretter, umfassend:
- ein Außengehäuse (12), das einen Durchlasskanal für den Luftstrom definiert,
- eine klappenförmige Einrichtung (18) zum Öffnen und Schließen des Durchlasskanals für den Luftstrom,
- eine erste Einrichtung (22) zur Anpassung der Ausgaberichtung des Luftstroms, und
- eine zweite Einrichtung (24) zur Anpassung der Ausgaberichtung des Luftstroms, die in Strömungsrichtung nach der ersten Anpassungsvorrichtung (22) angeordnet ist,
**dadurch gekennzeichnet, dass** sie nur einen einzigen Steuerungsknopf (36) umfasst, der zur Steuerung des Öffnens und Schließens der klappenförmigen Einrichtung (18) in einer linearen Richtung (42) bewegbar ist und zur Steuerung der ersten Anpassungseinrichtung (22) in einer Winkelbewegung drehbar ist und zur Steuerung der zweiten Anpassungseinrichtung (24) weiter in der linearen Richtung (42) bewegbar ist.

2. Entlüftungsöffnung nach Anspruch 1, **dadurch gekennzeichnet, dass** der Steuerungsknopf (36) einen röhrenförmigen Stiel (38) aufweist, der in einer am Außengehäuse (12) befestigten röhrenförmigen Aufnahme (40) geführt wird.

3. Entlüftungsöffnung nach Anspruch 2, **dadurch gekennzeichnet, dass** der röhrenförmige Stiel (38) des Steuerungsknopfs (36) drehfest an einem Schaft (46) angebracht ist, der zusammen mit dem Steuerungsknopf (36) entlang der linearen Richtung (42) über einen Teil des Wegs des Steuerungsknopfs (36) entlang der selben linearen Richtung (42) bewegbar ist.

4. Entlüftungsöffnung nach Anspruch 3, **dadurch gekennzeichnet, dass** an einem der Enden des Schaftes (46) ein gezahntes Bauteil (48) fixiert ist, wobei das gezahnte Bauteil (48) mit zwei gezahnten Abschnitten (50) zusammenwirkt, die die Öffnungs- und Schließbewegung von zwei Flügeln (20), die zu der klappenförmigen Einrichtung (18) gehören, steuern.

5. Entlüftungsöffnung nach Anspruch 3, **dadurch gekennzeichnet, dass** der Schaft (46) die Anpassungsbewegung der Ablenkbauteile (26) der ersten Anpassungseinrichtung (22) mit Hilfe einer aus einer Schraube und Mutter bestehenden Einrichtung (54, 56, 58) steuert.

6. Entlüftungsöffnung nach Anspruch 3, **dadurch gekennzeichnet, dass** der Schaft (46) drehfest an einem geformten Körper (74), der zu der ersten Anpassungseinrichtung (22) gehört, angebracht ist, wobei der geformte Körper (74) eine Wand (76) zur Luftstromablenkung aufweist.

7. Entlüftungsöffnung nach Anspruch 3, **dadurch gekennzeichnet, dass** der röhrenförmige Stiel (38) des Steuerungsknopfs (36) einen gezahnten Abschnitt (68) aufweist, der mit einem gezahnten Abschnitt (70) eines Ablenkungsbauteils (30a), das zu der zweiten Anpassungseinrichtung (24) gehört, zusammenwirkt.

8. Entlüftungsöffnung nach Anspruch 3, **dadurch gekennzeichnet, dass** der röhrenförmige Stiel (38) des Steuerungsknopfs (36) einen elastischen Zahn (62) aufweist, der selektiv in eine erste und in eine zweite Kerbe (64, 66) eingreift, die auf der Außenfläche (46) des Stiels gebildet sind.

## Revendications

1. Bouche d'air de distribution d'air pour des tableaux de bord de véhicules, comprenant :
- un boîtier extérieur (12) qui définit un conduit de passage du flux d'air,
- un dispositif à clapet (18) pour ouvrir et fermer le conduit de passage du flux d'air,
- un premier dispositif (22) d'ajustement de la direction de sortie du flux d'air, et
- un second dispositif (24) d'ajustement de la direction de sortie du flux d'air, placé en aval du premier dispositif d'ajustement (22),
**caractérisée en ce qu'**elle ne comporte qu'un unique bouton de commande (36) mobile dans une direction linéaire (42) pour commander l'ouverture et la fermeture du dispositif à clapet (18), et susceptible de rotation angulaire pour commander le premier dispositif d'ajustement (22) et également mobile le long de ladite direction linéaire (42) pour commander le second dispositif d'ajustement (24).

2. Bouche d'air selon la revendication 1, **caractérisée en ce que** le bouton de commande (36) possède une tige tubulaire (38) qui est guidée dans un siège tubulaire (40) fixé au boîtier extérieur (12).

3. Bouche d'air selon la revendication 2, **caractérisée en ce que** la tige tubulaire (38) du bouton de commande (36) est fixe en rotation par rapport à un arbre (46) qui est mobile en même temps que le bouton de commande (36) le long de ladite direction linéaire (42) sur une partie du déplacement du bouton de commande (36) le long de la même direction linéaire (42).

4. Bouche d'air selon la revendication 3, **caractérisée en ce qu'**un organe muni de dents (48) est fixé à l'une des extrémités dudit arbre (46), l'élément pourvu de dents (48) coopérant avec deux secteurs pourvus de dents (50) qui commandent le mouvement d'ouverture et de fermeture de deux volets (20) appartenant au dispositif à clapet (18).

5. Bouche d'air selon la revendication 3, **caractérisée en ce que** l'arbre (46) commande le mouvement d'ajustement des organes déflecteurs (26) du premier dispositif d'ajustement (22) au moyen d'un dispositif à vis et écrou (54, 56, 58).

6. Bouche d'air selon la revendication 3, **caractérisée en ce que** ledit arbre (46) est fixe en rotation par rapport à un corps conformé (74) appartenant au premier dispositif d'ajustement (22), ledit corps conformé (74) ayant une paroi (76) pour dévier le flux d'air.

7. Bouche d'air selon la revendication 3, **caractérisée en ce que** ladite tige tubulaire (38) du bouton de commande (36) possède une partie pourvue de dents (68) qui coopère avec un secteur pourvu de dents (70) d'un organe déflecteur (30a) appartenant au second dispositif d'ajustement (24).

8. Bouche d'air selon la revendication 3, **caractérisée en ce que** la tige tubulaire (38) du bouton d'ajustement (36) possède une dent élastique (62) qui vient sélectivement s'engager dans une première et une seconde encoches (64, 66) formées sur la surface externe de la tige (46).
